Europäisches Patentamt

European Patent Office

Office européen des brevets

(19)

(11) EP 0 511 044 B1

(12) **FASCICULE DE BREVET EUROPEEN**

(45) Date de publication et mention
de la délivrance du brevet:
**10.09.1997 Bulletin 1997/37**

(51) Int. Cl.⁶: **C03C 17/00**, C03C 17/34

(21) Numéro de dépôt: **92400930.1**

(22) Date de dépôt: **03.04.1992**

(54) **Dépôt de couches pyrolysées à performances améliorées et vitrage revêtu d'une telle couche**

Anbringen von pyrolysierten Schichten mit verbesserter Leistung und Glasscheibe, versehen mit so einer Schicht

Deposition of pyrolyzed layers with improved performance and a glass pane coated with such a layer

(84) Etats contractants désignés:
**AT BE CH DE ES FR GB IT LI LU NL SE**

(30) Priorité: **09.04.1991 FR 9104286**

(43) Date de publication de la demande:
**28.10.1992 Bulletin 1992/44**

(73) Titulaire: **SAINT-GOBAIN VITRAGE**
**92400 Courbevoie (FR)**

(72) Inventeurs:
• **Jacquet, Patrice**
**F-60350 Vieux Moulin (FR)**

• **Sauvinet, Vincent**
**DK-1550 Copenhague (DK)**

(74) Mandataire: **Muller, René et al**
**SAINT-GOBAIN RECHERCHE,**
**39, quai Lucien Lefranc-BP 135**
**93303 Aubervilliers Cédex (FR)**

(56) Documents cités:
EP-A- 0 170 216        DE-A- 2 041 843
FR-A- 2 005 224        GB-A- 2 078 710
GB-A- 2 199 848        US-A- 4 187 336

EP 0 511 044 B1

Printed by Rank Xerox (UK) Business Services
2.14.14/3.4

## Description

La présente invention se rapporte au dépôt de couches pyrolysées sur un substrat en verre, en particulier de couches interférentielles, notamment à base de $SnO_2$, ITO... Elle est particulièrement adaptée au dépôt de couches pyrolysées obtenues à partir de composés pulvérulents.

Il est connu, notamment par le brevet EP 125 153, de former une couche basse émissive sur un substrat en verre à partir d'une poudre de composé d'étain pulvérulent, en particulier du fluorure de dibutyl étain (DBTF). Le dépôt est pratiqué à température élevée voisine de 550°C. Ce dépôt peut s'effectuer à vitesse suffisamment élevée pour revêtir un ruban de verre flotté, quelle que soit son épaisseur, c'est-à-dire à une vitesse qui peut aller de 3 à plus de 25 m/mn et qui en moyenne pour les épaisseurs de verre les plus classiquement fabriquées à l'heure actuelle est autour de 12 m/mn.

Avec une épaisseur de couche de $SnO_2$ dopé au fluor de l'ordre de 180 nm obtenue comme dit dans le brevet déjà cité EP 125 153, on atteint une émissivité de l'ordre de 0,35 ; avec une épaisseur supérieure, de 300 à 350 nm, on atteint une émissivité de l'ordre de 0,25.

Cette couche de 180 nm est légèrement bleutée en réflexion ; elle ne tolère que de faibles variations d'épaisseur, de l'ordre de la taille de la molécule de DBTF, sous peine de variations de couleur. Ainsi, si l'épaisseur augmente un peu trop, la couleur devient jaune.

La couche de 300 à 350 nm d'épaisseur est légèrement verte en réflexion et si son épaisseur varie trop, sa couleur varie elle aussi ; ainsi, si son épaisseur augmente, sa couleur peut devenir rouge.

On peut donc dire que les épaisseurs doivent être maîtrisées très finement sous peine de voir la couleur des couches varier, localement si l'épaisseur n'est pas uniforme, globalement si l'épaisseur reste uniforme. En outre, le choix des performances souhaitables pour un produit ne peut pas se faire sans tenir compte du fait que performance et épaisseur et donc couleur sont liées. On peut se dégager de ces contraintes que constitue la couleur en se plaquant dans les gammes d'épaisseur de couche pour lesquelles l'aspect coloré en réflexion disparaît. Certes on atteint des émissivités intéressantes, de l'ordre de 0,12 et même moins, à partir de 800 ou 1000 nm, mais la transmission lumineuse au travers du vitrage est diminuée, les coûts de production sont augmentés du fait de la consommation nettement plus importante en matière de revêtement, l'aspect terne, voilé de la couche, approximativement proportionnel à son épaisseur est accru, les difficultés de production grandissent (on augmente l'encrassement de la buse de projection de poudre du fait des débits de poudre plus importants, d'où nécessité de nettoyages et d'arrêts plus fréquents. Le verre est beaucoup plus refroidi d'où pyrolyse moins bonne, etc... et, en général, on se rapproche des limites du procédé), la pollution est plus importante.

On sait aussi que le rendement de pyrolyse peut être augmenté si le dépôt s'effectue sur un verre plus chaud, mais il en résulte des défauts de planéité dudit verre du fait de sa déformabilité augmentant avec la température. En effet, porté à température trop élevée, le verre se ramollirait et s'affaisserait entre les rouleaux supports qui le transportent.

La présente invention vise à résoudre ce problème d'amélioration des performances sans accroître les coûts, sans augmenter la pollution, sans créer de voile, sans se rapprocher des limites du procédé, sans altération de la planéité du substrat. Elle vise également à éliminer les contraintes de couleur, alors que l'amélioration des performances autorise plus de choix dans les épaisseurs de couches sans contrainte de couleur.

Elle propose pour cela de distribuer un composé pyrolysable sur un substrat en verre chaud, préalablement surchauffé, rapidement et d'un seul côté, du côté destiné à recevoir le composé pyrolysable, suffisamment rapidement pour que la température ne s'égalise pas dans l'épaisseur du verre.

L'invention consiste alors à provoquer la surchauffe de ladite face à une température supérieure ou égale à la température de ramollissement du substrat, qui peut notamment atteindre 690°C, puis à procéder au dépôt par pyrolyse sans que cette élévation de température ait pu se propager dans l'épaisseur de verre du substrat et ait conduit à une homogénéisation dans l'épaisseur du verre à une température supérieure à sa température de ramollissement (on précise que la température de ramollissement du verre est de l'ordre de 650°C).

En tenant compte d'un certain refroidissement du verre inévitable, entre sone de surchauffe et sone effective de dépôt par pyrolyse, on peut ainsi effectuer la pyrolyse sur une face d'un substrat en verre qui conserve une élévation de température sensible, soit notamment une élévation pouvant aller jusqu'à 60°C, par rapport aux températures usuelles de pyrolyse déjà mentionnées, de l'ordre de 580°C, que l'on rencontre lorsqu'on utilise ces techniques sur un ruban de verre en sortie de bain de flottage par exemple.

Procéder au dépôt à une température aussi élevée conduit à un rendement de pyrolyse supérieur, sans pour autant affecter la qualité optique du verre. En effet, celui-ci "n'a pas le temps" d'atteindre à coeur sa température de ramollissement et par conséquent ne risque pas d'affaissement en cas de transport sur des rouleaux convoyeurs.

Ce procédé permet d'atteindre des performances élevées de la couche pyrolysée, notamment d'émissivité, supérieures à celles normalement accessibles par dépôt de la couche à une température homogène du substrat en verre et n'altérant pas sa planéité.

Ces conditions de dépôts permettant d'atteindre des performances élevées, autorisent des couches d'épaisseurs réduites, comparées aux épaisseurs habituellement pratiquées, dans les conditions habituelles de température, pour obtenir une performance élevée.

Cette réduction d'épaisseur s'accompagne du maintien d'un aspect coloré des couches obtenues et pour atténuer ou supprimer cet aspect coloré, l'invention propose un traitement anti-couleur.

Selon une variante de l'invention, le traitement anti-couleur est une sous-couche à caractéristiques d'indice et d'épaisseur adaptées.

Parmi les traitements anti-couleur proposés dans le cadre de l'invention, citons une sous-couche anti-couleur déposée par la technique dite CVD (Chemical Vapor Deposition) en amont de la couche pyrolysée à propriétés notamment de basse émissivité, en particulier pratiquée à l'intérieur de l'enceinte float de la ligne de fabrication du verre.

La sous-couche anti-couleur peut également être obtenue par d'autres procédés de pyrolyse : pyrolyse de composés organo-métalliques en solution ou en suspension dans un liquide, pyrolyse de composés à l'état pulvérulent, CVD à l'extérieur du float.

On entend par sous-couche une épaisseur homogène unique, une épaisseur double, une épaisseur à gradient d'indice... et, en général, tout dépôt simple ou multiple sous-jacent bien connu dans ce domaine.

Parmi les traitements anti-couleur, citons également les surcouches, c'est-à-dire les dépôts simples ou multiples ou à caractéristiques évolutives (gradients d'indice...) déposés au-dessus de la couche fonctionnelle, notamment basse émissive, dont on désire atténuer ou supprimer l'aspect coloré en réflexion et également les combinaisons de sous-couches et surcouches.

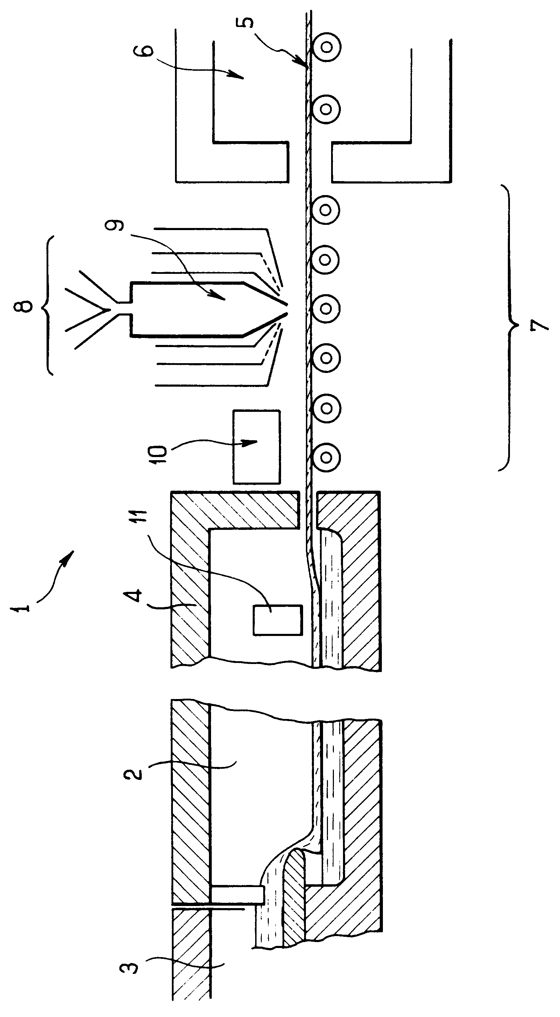

L'invention sera maintenant décrite plus en détail en référence à la figure, jointe en annexe, qui représente le schéma d'une ligne de fabrication de verre à couches selon l'invention, utilisant le procédé float et réalisant les couches par pyrolyse en sortie de float pour l'une, par pyrolyse CVD à l'intérieur du float pour l'autre.

Ce schéma montre une ligne 1 de fabrication de verre plat incluant une installation float 2.

Du verre fondu dans un four de fusion 3 est délivré dans l'installation float 2 où il s'étale, acquiert les caractéristiques de planéité, de poli, de largeur et d'épaisseur désirées en flottant sur un bain d'étain en fusion enfermé dans une enceinte 4 où règne une atmosphère réductrice.

Un ruban continu 5 de verre est ainsi formé dans le float 2. Ce ruban 5 est extrait du float 2 et parcourt, à l'atmosphère libre, une certaine distance pouvant varier d'une ligne de fabrication à l'autre, avant de pénétrer dans un four de recuisson 6. Dans cette zone 7 à l'atmosphère libre, après le float 2 et avant le four de recuisson 6, sont situés des moyens 8 de revêtement du ruban de verre 5 par un procédé de pyrolyse. Le procédé de pyrolyse peut être un procédé de pyrolyse poudre, c'est-à-dire consistant à distribuer aussi régulièrement que possible sur le verre chaud sortant du float 2, à l'aide d'une buse 9 du type de celles décrites dans le brevet EP 125 153 déjà cité, s'étendant en regard du ruban de verre sur toute sa largeur, une poudre ou un mélange de poudres en suspension dans un gaz vecteur, en général l'air, ladite ou lesdites poudres se décomposant au contact du verre chaud et s'oxydant pour laisser sur le verre une mince couche d'oxyde métallique.

Ce procédé de pyrolyse peut également être un procédé de pyrolyse liquide dans lequel les composés métalliques réactifs et décomposables à la chaleur sont en solution ou en suspension dans un liquide. Ce procédé est, par exemple, décrit dans le brevet FR 2 176 760.

Il peut également être un procédé CVD dans lequel les composés réactifs sont à l'état gazeux. Il est à noter que la pyrolyse CVD peut même être pratiquée à l'intérieur de l'enceinte float, dans sa dernière portion, avant la sortie du verre à l'aide d'une buse 11.

Le procédé de pyrolyse à poudre présente, en particulier, l'avantage de ne pas mettre en oeuvre des solvants, donc d'entraîner moins de pollution, moins de toxicité, moins de refroidissement du verre, d'autoriser des vitesses de défilement du verre élevées - toutes celles pratiquées pour la fabrication des verres floats usuels soit 1,5 à 2 mm d'épaisseur, jusqu'à 8, 10, 12 mm et au-delà - de fournir des couches particulièrement résistantes.

Selon l'invention, pour atteindre des performances élevées de la couche pyrolysée conductrice et à basse émissivité, avant dépôt de ladite couche, la surface du verre destinée à recevoir le dépôt est, immédiatement avant dépôt, rapidement surchauffée avec une intensité de chauffage importante par des moyens 10 de chauffage uniformes et intensifs. Ces moyens de chauffage doivent être capables de chauffer rapidement la face exposée du ruban de verre, et ceci de manière homogène. On préfère ainsi utiliser des systèmes chauffants qui procurent de la chaleur en combinant à un phénomène de rayonnement, par la présence d'une surface incandescente, obtenue par combustion sans flamme de gaz chaud, un phénomène de convection de gaz chauds évacués, issus de la combustion. Sans flamme risquant de toucher le verre de manière irrégulière, le chauffage est plus homogène et plus contrôlable.

Dans la mesure où c'est la surface supérieure du ruban de verre qui reçoit le dépôt de couche, c'est cette surface supérieure qui reçoit le maximum de chauffage et les moyens de chauffage intensif sont disposés au-dessus du ruban de verre, en regard de toute sa largeur, et dirigés de façon à chauffer sa surface supérieure.

Dans le cas d'un dépôt sur l'autre face du ruban de verre, les moyens de chauffage intensif sont, bien entendu, disposés différemment.

Ces moyens complémentaires de chauffage intensif sont positionnés et dimensionnés de façon à procurer une température plus élevée à la surface du verre destinée à recevoir la couche mince par pyrolyse, sans que l'épaisseur et la surface opposée du verre ne subissent une augmentation substantielle de leur température, ce qui serait préjudiciable à la bonne planéité du ruban de verre qui, à cette température trop élevée, risquerait de se déformer sur les moyens de convoyage qui l'amènent au four de recuisson 6.

Dans ce but d'une part, et également pour des questions d'encombrement entre zone de pyrolyse et sortie du float d'autre part, les moyens de chauffage intensif sont de courte longueur dans la direction de défilement du ruban de verre.

En effet une grande longueur de chauffage, donc un temps long de chauffage, se traduirait par une diffusion importante de la chaleur supplémentaire dans l'épaisseur du verre et donc amènerait l'inconvénient signalé. Ainsi, des longueurs de chauffage intensif de l'ordre de 1 m ou moins, de préférence de l'ordre de 50 à 60 cm, pour des vitesses de défilement du verre de l'ordre de 6 à 20 m/mn et donc autour de 10 m/mn sont recommandées, ce qui correspond à des temps de chauffage de l'ordre de quelques secondes, de l'ordre de 2 à environ une dizaine.

Ce chauffage est, par exemple, obtenu par un moyen de chauffage à gaz notamment acétylène, propane, butane...

Le temps et la puissance de surchauffe seront ajustés de façon à obtenir une élévation de la face du verre à revêtir jusqu'à environ de l'ordre de 30 à 60°C au moment de la pyrolyse et, en moyenne, de l'ordre de 40 à 50°C. Avec de telles élévations de la face à revêtir du verre, l'autre face du verre ne s'échauffe pas ou pas de plus environ une vingtaine de degrés jusqu'à la pyrolyse et, de préférence, pas plus d'environ 10 à 15°C, si bien qu'il n'y a aucune déformation notable enregistrée.

Compte tenu du refroidissement naturel du verre qui se produit depuis la sortie du float jusqu'à l'endroit de la pyrolyse, c'est une élévation de température plus importante qu'il a fallu fournir au verre par surchauffe, une élévation qui porte la surface du verre qui sera ultérieurement revêtue, jusqu'à environ 80°C au-delà de la température du verre à la sortie du float. Après défilement du verre ainsi surchauffé jusque sous la buse de pyrolyse, malgré le refroidissement naturel, l'effet de la surchauffe de 30 à 60°C et, en moyenne de 40 à 50°C, reste substantiel et il permet d'atteindre un gain de l'ordre de 20 à 25 % du rendement de pyrolyse. On préconise une distance entre zone de surchauffe, où sont placés les éléments chauffants, et zone de dépôt, où se trouve la buse, de l'ordre du mètre ou même une distance inférieure, ce qui permet de réduire ce phénomène de refroidissement.

En outre pendant qu'une des faces du verre, en général la surface supérieure, est surchauffée, pour réduire l'influence sur l'autre face, un léger refroidissement de cette autre face peut être opéré. Grâce à une telle surchauffe de l'ordre de 40 à 50°C pratiquée sur un ruban de verre destiné à être revêtu d'une couche mince basse émissive d'oxyde d'étain dopé au fluor, par exemple à partir d'une poudre de DBTF (fluorure de dibutyl étain) on obtient des performances d'émissivité qui seraient celles de couches de même nature, obtenues sans surchauffe, mais d'épaisseur d'environ 70 à 150 nm supérieure.

Ainsi une couche d'oxyde d'étain dopé au fluor, obtenue après surchauffe, peut présenter une résistivité de l'ordre de $5.10^{-4}$ $\Omega$.cm alors qu'en l'absence de surchauffe, la résistivité serait de l'ordre de $10.10^{-4}$ $\Omega$.cm.

Le tableau comparatif suivant rend compte de ces améliorations de performances, dans le cas d'une couche de $SnO_2$ dopé au fluor.

| épaisseur | sans surchauffe | avec surchauffe | couleur en réflexion |
|---|---|---|---|
| | émissivité | émissivité | |
| 340 nm | 0,23 | 0,17 | vert |
| 500 nm | 0,21 | 0,14 | vert bleu |
| 170 nm | 0,35 | 0,30 | bleu |
| 225 nm | 0,30 | $\approx 0,25$ | jaune |

A performance égale, la surchauffe autorise une diminution d'épaisseur de couche.

Mais les variations d'épaisseur s'accompagnent de changements de couleur et les nouvelles couleurs risquent de ne pas plaire et/ou de ne pas être adaptées à l'application envisagée. Pour éviter toute contrainte liée à la couleur, on effectue un traitement anti-couleur.

Ce traitement est une ou plusieurs sous-couches d'épaisseurs et indices adaptés, comme décrit par exemple dans le brevet FR 2 439 167, une ou plusieurs surcouches d'épaisseurs et d'indices adaptés, une combinaison de sous-couche(s) et surcouche(s).

Selon un mode préféré de l'invention, le substrat en verre est caractérisé en ce que la fonction anti-couleur est réalisée par au moins une sous-couche d'épaisseur $\lambda/4$ optimisée pour une longueur d'onde de l'ordre de 550 nm, d'indice $n = \sqrt{n_{verre} \times n_{couche}}$ déposée entre le substrat en verre et la couche mince conductrice.

Une façon simple de réaliser une sous-couche, à cause de l'absence de refroidissement du verre, l'absence d'encombrement supplémentaire, est le dépôt de ladite sous-couche par CVD à l'intérieur de l'enceinte float. Cette technique de CVD à l'intérieur du float est décrite, notamment, par les brevets FR 2 274 572, FR 2 382 511 et FR 2 314 152. Cette technique est notamment utilisée pour la production d'une couche SiO-Si anti-couleur.

Avantageusement, la buse pour CVD permettant de déposer cette sous-couche est du type de celles décrites dans les demandes de brevet FR 91/01683 et FR 91/01682.

La couche anti-couleur déposée par CVD doit avoir une épaisseur de l'ordre de 70 à 80 nm et un indice compris entre 1,45 et 2, de préférence entre 1,60 et 1,80 et, plus précisément pour un effet optimum entre 1,68 et 1,72.

La composition gazeuse employée pour obtenir cette couche comprend usuellement du silane en association avec un carbure insaturé tel que l'éthylène et éventuellement un oxydant tel que le gaz carbonique $Co_2$ ou autre, comme enseigné par les brevet EP 275 662 et EP 348 185.

D'autres technologies pour la fabrication de la précouche sont également possibles, ainsi par exemple la technologie de pyrolyse liquide, comme décrit dans les brevets FR 90/08530 et FR 90/08531, dans lesquels la précouche est respectivement à base d'$Al_2O_3$/$TiO_2$ et à base d'$Al_2O_3$/$SnO_2$.

Une précouche par pyrolyse solide, comme enseigné par le brevet FR 90/15277, est également possible.

Une surcouche par voie de pyrolyse solide, liquide ou gazeuse est également possible et même directement sur la ligne float de fabrication du verre. Ainsi, par exemple, une surcouche d'$Al_2O_3$ d'épaisseur de l'ordre de 80 à 100 nm et d'indice compris entre 1,4 et 1,7 comme décrit dans la demande de brevet FR 91/02002.

Ainsi donc une fonction anti-couleur est tout à fait intéressante, associée à une surchauffe avant pyrolyse de la couche basse émissive et conductrice. Elle permet de s'affranchir des contraintes de couleur et elle permet de profiter pleinement des libertés supplémentaires au point de vue épaisseur, qu'autorise la surchauffe.

## Revendications

1. Procédé de dépôt par pyrolyse d'un revêtement sur un substrat en verre, sous forme d'un ruban en mouvement en sortie d'une enceinte de flottage, **caractérisé en ce qu'**on surchauffe la face du substrat destinée à recevoir ce revêtement jusqu'à une température supérieure ou égale à la température de ramollissement du substrat, et notamment pouvant atteindre 690°C, **et en ce qu'**on procède ensuite au dépôt sans que ne se produise dans l'épaisseur du substrat une homogénéisation de la température à une valeur allant au-delà de la température de ramollissement dudit substrat.

2. Procédé selon la revendication 1, **caractérisé en ce qu'**on surchauffe la face du substrat destinée à recevoir le revêtement afin qu'elle présente lors du dépôt par pyrolyse une élévation de température allant jusqu'à 60°C par rapport aux températures de pyrolyse usuelles de l'ordre de 580°C notamment.

3. Procédé selon la revendication 2, **caractérisé en ce que** l'élévation de température est comprise entre 30 et 60°C.

4. Procédé selon l'une des revendications précédentes, **caractérisé en ce qu'**on surchauffe la face du substrat destinée à recevoir le revêtement afin qu'elle présente lors du dépôt par pyrolyse une température de l'ordre de 630°C.

5. Procédé selon l'une des revendications précédentes, **caractérisé en ce que** la face opposée du substrat en verre est simultanément refroidie.

6. Procédé selon l'une des revendications précédentes, **caractérisé en ce que** la surchauffe est pratiquée sur une distance qui est au maximum de l'ordre de 1 mètre et, de préférence, de l'ordre de 50 à 60 cm.

7. Procédé selon l'une des revendications précédentes, **caractérisé en ce que** la distance qui sépare la zone de surchauffe de la zone de dépôt par pyrolyse est de l'ordre du mètre.

8. Procédé selon l'une des revendications précédentes, **caractérisé en ce que** la surchauffe est obtenue par des moyens de chauffage à gaz, notamment l'acétylène, le propane ou le butane.

9. Procédé selon l'une des revendications précédentes, **caractérisé en ce que** la surchauffe est obtenue par des éléments chauffants combinant chauffage par rayonnement et par convection.

10. Procédé selon l'une des revendications précédentes, **caractérisé en ce que** la pyrolyse avec surchauffe est associée à un traitement anti-couleur.

11. Procédé selon la revendication 10, **caractérisé en ce que** le traitement anti-couleur comporte au moins une sous-couche SiO/Si obtenue par CVD à l'intérieur de l'enceinte de flottage de fabrication du verre à partir d'un mélange des gaz silane et carbure insaturé.

**12.** Substrat présentant les caractéristiques de ceux obtenus par le procédé selon l'une des revendications 1 à 11 dans lequel le revêtement est à base d'étain dopé au fluor, produit de pyrolyse de composés pulvérulents de préférence.

**13.** Substrat en verre revêtu d'un revêtement selon la revendication 13, **caractérisé en ce que** le revêtement présente une résistivité atteignant jusqu'à $5.10^{-4}$ $\Omega$.cm.

**14.** Substrat revêtu selon la revendication 12 ou 13, **caractérisé en ce que** le revêtement présente une émissivité comprise entre 0,17 et 0,30 pour une épaisseur comprise entre 170 et 340 nanomètres.

**15.** Substrat en verre revêtu d'un revêtement selon l'une des revendications 12 à 14, **caractérisé en ce qu'**il possède en outre une ou plusieurs couches à fonction anti-couleur.

**16.** Substrat en verre selon la revendication 15, **caractérisé en ce que** la fonction anti-couleur est réalisée par au moins une sous-couche d'épaisseur $\lambda/4$ optimisée pour une longueur d'onde de l'ordre de 550 nm, d'indice $n = [n_{(verre)} \times n_{(couche)}]^{1/2}$ déposée entre le substrat en verre et le revêtement.

**17.** Substrat en verre selon la revendication 16, **caractérisé en ce que** la sous-couche est déposée par l'un des procédés appartenant au groupe suivant: CVD, pyrolyse à partir de composés liquides, pyrolyse à partir de composés pulvérulents.

## Claims

**1.** Method of deposition, by pyrolysis, of a coating on a glass substrate, the substrate being in the form of a moving ribbon coming from a float enclosure, characterized in that the face of the substrate intended for receiving the coating is additionally heated to a temperature higher than or equal to the softening temperature of the substrate, and which notably may reach 690°C, and in that the deposition is then carried out without a homogenization of the temperature to a value exceeding the softening temperature of the substrate taking place within the thickness of the substrate.

**2.** Method according to claim 1, characterized in that the face of the substrate intended for receiving the coating is heated so that it has, during the deposition by pyrolysis, an increase of temperature extending up to 60°C above the usual pyrolysis temperatures of the order of 580°C notably.

**3.** Method according to claim 2, characterized in that the rise of temperature lies between 30 and 60°C.

**4.** Method according to one of the preceding claims, characterized in that the face of the substrate intended for receiving the coating is heated so that it has, during the deposition by pyrolysis, a temperature of the order of 630°C.

**5.** Method according to one of the preceding claims, characterized in that the opposite face of the glass substrate is simultaneously cooled.

**6.** Method according to one of the preceding claims, characterized in that the additional heating is carried out over a distance which is at most of the order of 1 metre and, preferably, of the order of 50 to 60 cm.

**7.** Method according to one of the preceding claims, characterized in that the distance that separates the additional heating zone from the zone for deposition by pyrolysis is of the order of 1 metre.

**8.** Method according to one of the preceding claims, characterized in that the additional heating is produced by heating means using gas, notably acetylene, propane or butane.

**9.** Method according to one of the preceding claims, characterized in that the additional heating is produced by heating elements combining radiation heating and convection heating.

**10.** Method according to one of the preceding claims, characterized in that the pyrolysis with additional heating is associated with an anti-colour treatment.

**11.** Method according to claim 10, characterized in that the anti-colour treatment comprises at least one underlying film of SiO/Si produced by CVD inside the float enclosure for producing the glass from a mixture of the gases silane and unsaturated carbide.

12. Substrate having the characteristics of those produced by the method according to one of claims 1 to 11, in which the coating is based upon tin doped with fluorine, produced by pyrolysis of preferably pulverulent compounds.

13. Glass substrate coated with a coating according to claim 12, characterized in that the coating has a resistivity of up to 5x $10^{-4}$ $\Omega$cm.

14. Coated substrate according to claim 12 or 13, characterized in that the coating has an emissivity lying between 0.17 and 0.30 for a thickness lying between 170 and 340 nanometres.

15. Glass substrate coated with a coating according to one of claims 12 to 14, characterized in that it has, in addition, one or more films with an anti-colour function.

16. Glass substrate according to claim 15, characterized in that the anti-colour function is achieved by at least one underlying film of thickness $\lambda/4$, optimized for a wavelength of the order of 550 nm, of index $n = [n_{(glass)} \times n_{(film)}]^{1/2}$, the underlying film being deposited between the glass substrate and the coating.

17. Glass substrate according to claim 16, characterized in that the underlying film is deposited by one of the methods belonging to the following group: CVD, pyrolysis from liquid compounds, pyrolysis from pulverulent compounds.

**Patentansprüche**

1. Verfahren zum Aufbringen einer Beschichtung auf einem sich bewegenden Glassubstrat, das in Form eines Bandes vorliegt, am Ausgang einer Floatglasanlage durch Pyrolyse, **dadurch gekennzeichnet, daß** die Substratoberfläche, welche die Beschichtung erhalten soll, bis auf eine Temperatur übererhitzt wird, die größer oder gleich der Erweichungstemperatur des Subtrats ist und insbesondere 690 °C erreichen kann, **und daß** anschließend der Abscheidungsvorgang durchgeführt wird, ohne daß dabei in der Dicke des Subtrats eine Vergleichmäßigung der Temperatur auf einen Wert stattfindet, der die Erweichungstemperatur dieses Subtrats erreicht oder sie übersteigt.

2. Verfahren nach Anspruch 1, **dadurch gekennzeichnet, daß** die Substratoberfläche, welche die Beschichtung erhalten soll, übererhitzt wird, damit sie während des Abscheidungsvorgangs durch Pyrolyse eine Temperaturerhöhung aufweist, die in bezug auf übliche Pyrolysetemperaturen von insbesondere etwa 580 °C, bis 60 °C geht.

3. Verfahren nach Anspruch 2, **dadurch gekennzeichnet, daß** die Temperaturerhöhung 30 bis 60 °C beträgt.

4. Verfahren nach einem der vorhergehenden Ansprüche, **dadurch gekennzeichnet, daß** die Substratoberfläche, welche die Beschichtung erhalten soll, überhitzt wird, damit sie während des Abscheidungsvorgangs durch Pyrolyse eine Temperatur von etwa 630 °C aufweist.

5. Verfahren nach einem der vorhergehenden Ansprüche, **dadurch gekennzeichnet, daß** die gegenüberliegende Oberfläche des Glassubstrats gleichzeitig gekühlt wird.

6. Verfahren nach einem der vorhergehenden Ansprüche, **dadurch gekennzeichnet, daß** die Überhitzung über einen Abstand durchgeführt wird, der höchstens etwa 1 Meter und vorzugsweise etwa 50 bis 60 cm beträgt.

7. Verfahren nach einem der vorhergehenden Ansprüche, **dadurch gekennzeichnet, daß** der Abstand, welcher die Überhitzungszone von der Zone der Abscheidung durch Pyrolyse trennt, etwa einen Meter beträgt.

8. Verfahren nach einem der vorhergehenden Ansprüche, **dadurch gekennzeichnet, daß** die Überhitzung durch Beheizungsmittel herbeigeführt wird, die mit Gas, insbesondere Acetylen, Propan oder Butan, arbeiten.

9. Verfahren nach einem der vorhergehenden Ansprüche, **dadurch gekennzeichnet, daß** die Überhitzung durch Beheizungselemente herbeigeführt wird, in denen eine Beheizung durch Strahlung und durch Konvektion kombiniert ist.

10. Verfahren nach einem der vorhergehenden Ansprüche, **dadurch gekennzeichnet, daß** mit der Pyrolyse mit Überhitzung eine Entfärbungsbehandlung einhergeht.

11. Verfahren nach Anspruch 10, **dadurch gekennzeichnet, daß** die Entfärbungsbehandlung mindestens eine SiO/Si-Grundschicht umfaßt, die im Inneren der Floatglasanlage ausgehend von einem Gasgemisch aus Silanen und ungesättigten Kohlenwasserstoffen durch CVD erhalten wird.

12. Substrat, das die Eigenschaften der Substrate besitzt, die durch das Verfahren nach einem der Ansprüche 1 bis 11 erhalten werden, und dessen Beschichtung mit Fluor dotiertes Zinn zur Grundlage hat, das vorzugsweise durch Pyrolyse pulverförmiger Verbindungen hergestellt ist.

13. Glassubstrat, das mit einer Beschichtung nach Anspruch 13 überzogen ist, **dadurch gekennzeichnet, daß** die Beschichtung einen spezifischen Widerstand hat, der bis zu $5 \cdot 10^{-4} \, \Omega \cdot cm$ erreicht.

14. Substrat, das nach Anspruch 12 oder 13 beschichtet ist, **dadurch gekennzeichnet, daß** die Beschichtung bei einer Dicke von 170 bis 340 Nanometern einen Emissionskoeffizienten von 0,17 bis 0,30 aufweist.

15. Glassubstrat, das mit einer Beschichtung nach einem der Ansprüche 12 bis 14 überzogen ist, **dadurch gekennzeichnet, daß** es außerdem eine oder mehrere Schichten mit Entfärbungsfunktion besitzt.

16. Glassubstrat nach Anspruch 15, **dadurch gekennzeichnet, daß** die Entfärbungsfunktion durch mindestens eine zwischen Glassubstrat und Beschichtung aufgebrachte Grundschicht realisiert wird, die eine Dicke von $\lambda/4$ hat, die für eine Wellenlänge von etwa 550 nm und einen Brechungsindex von $n = [n_{(Glas)} \cdot n_{(Schicht)}]^{1/2}$ optimiert ist.

17. Glassubstrat nach Anspruch 16, **dadurch gekennzeichnet, daß** die Grundschicht durch eines der Verfahren aufgebracht wird, die zur folgenden Gruppe gehören: CVD und Pyrolyse von flüssigen und von pulverförmigen Verbindungen.

EP 0 511 044 B1